# EUROPÄISCHE PATENTSCHRIFT

(11) **EP 3 721 968 B1**
(45) Veröffentlichungstag und Bekanntmachung des Hinweises auf die Patenterteilung: **22.12.2021**
(21) Anmeldenummer: 20166105.5
(22) Anmeldetag: 27.03.2020
(51) Int. Cl.: B01D 46/08, F23J 15/02

(54) **FUNKENVORABSCHEIDER UND ENTSTAUBUNGSANLAGE**
SPARK DISCHARGE AND DUST EXTRACTION PLANT
PRÉ-SÉPARATEUR D'ÉTINCELLES ET SYSTÈME DE DÉPOUSSIÉRAGE

(30) Priorität: 08.04.2019 DE 102019109146
(43) Veröffentlichungstag der Anmeldung: 14.10.2020
(73) Patentinhaber: Novus air GmbH, 01640 Coswig (DE)
(72) Erfinder: Kaiser, Tommy, 01277 Dresden (DE); Honscha, Bork, 01723 Wilsdruff (DE)
(74) Vertreter: Lippert Stachow Patentanwälte Rechtsanwälte Partnerschaft mbB

(56) Entgegenhaltungen:
- DE-A1-102013 017 868
- US-A- 801 435
- US-A- 3 066 464

## Beschreibung

Die Erfindung betrifft einen Funkenvorabscheider zur Abscheidung einer schweren Partikelfraktion aus einem Gas-Volumenstrom sowie eine Entstaubungsanlage zur Reinigung von mit Partikeln, beispielsweise Schweißrauch oder Laserrauch, belasteter Luft, die einen derartigen Funkenvorabscheider aufweist.

Bei der Metallbearbeitung, z.B. beim Schleifen oder beim Schneiden, entstehen neben den lungengängigen Schadstoffen (leichte Partikelfraktion) auch Funken und glühende Teile (schwere Partikelfraktion). Derartig verunreinigte Luft wird in Entstaubungsanlagen gereinigt, die üblicherweise ein von Gehäusewänden begrenztes Gehäuse aufweist, das eine Rohgas-Eintrittsöffnung und eine Reingas-Austrittsöffnung aufweist und das durch eine Filteranordnung in einen Rohgasraum und einen Reingasraum unterteilt ist, wobei die Filteranordnung eine Mehrzahl von Filterelementen umfasst. Solche Filterelemente können beispielsweise Filtersäcke, Filterpatronen oder Filterkassetten sein, die oftmals aus brennbaren Filtermaterialien bestehen.

Geraten glühend heiße Partikel in das Innere einer solchen Entstaubungsanlage, so besteht akute Brandgefahr. Dieser Brandgefahr kann durch Verwendung eines Funkenvorabscheiders begegnet werden. Ein Funkenvorabscheider ist eine Baugruppe, die Funken, glühende Partikel usw. der schweren Partikelfraktion aus dem Rohgasstrom abtrennt, bevor dieser in die Entstaubungsanlage oder in einen Lüftungskanal geleitet wird.

Bekannte Funkenvorabscheider beruhen auf dem Prinzip der Trägheitsabscheidung, bei dem der Luftstrom durch Drallschaufeln in Rotation versetzt wird, wodurch die schweren Partikel radial auswärts bewegt und dann aus dem Rohgasstrom abgetrennt werden. Derartige Funkenabscheider sind relativ kompliziert aufgebaut, daher teuer in der Herstellung, schwergewichtig und benötigen einen großen Bauraum.

DE 10 2013 017 868 A1 beschreibt eine Funkenabscheidekammer einer Filtervorrichtung mit einem vertikal ausgerichteten plattenförmigen Prallelement, wobei seitliche Durchtrittsöffnungen benachbart zu den Längsrändern des Prallelements vorgesehen sind, so dass ein auf das Prallelement auftreffender horizontaler Gasstrom in derselben horizontalen Ebene entlang des Prallelements umgelenkt und durch die Durchtrittsöffnungen in Richtung einer Filterkammer der Filtervorrichtung geführt wird. Diese Lösung ist strömungstechnisch eher ungünstig und daher zum Einbau in Rohrleitungen ungeeignet.

Eine Aufgabe der vorliegenden Erfindung besteht daher darin, einen verbesserten Funkenvorabscheider anzugeben, mit dem die beschriebenen Nachteile des Standes der Technik behoben werden, der also einfach und kostengünstig herstellbar ist, ein geringes Gewicht und geringen Bauraumbedarf hat.

Vorgeschlagen wird daher ein Funkenvorabscheider zur Abscheidung einer schweren Partikelfraktion aus einem Gasstrom, der ein von Gehäusewänden begrenztes Gehäuse mit einem Gasstromeingang und einem dem Gasstromeingang horizontal gegenüberliegend angeordneten Gasstromausgang umfasst, wobei in dem Gehäuse zwischen dem Gasstromeingang und dem Gasstromausgang ein Strömungsteiler und zwei Kulissen angeordnet sind, der Strömungsteiler bezogen auf einen von dem Gehäuse definierten Strömungsquerschnitt mittig angeordnet ist, einen Teilquerschnitt dieses Strömungsquerschnitts überdeckt, in der Ansicht von oben ein V-förmiges Strömungsprofil aufweist und dadurch dazu ausgebildet ist, den Gasstrom in zwei horizontal nebeneinander strömende Teilströme aufzuteilen und die Teilströme seitlich zu verdrängen, und die beiden Kulissen beiderseits des Strömungsteilers und stromabwärts hinter dem Strömungsteiler angeordnet sind und einen nicht von dem Strömungsteiler überdeckten Restquerschnitt des Strömungsquerschnitts überdecken, in der Ansicht von oben parallel zu den Schenkeln des V-förmigen Strömungsprofils des Strömungsteilers verlaufen und dadurch in dem von einer Kulisse und der angrenzenden Gehäusewand eingeschlossenen Winkel eine Funkenfalle gebildet ist.

Der vorgeschlagene Funkenvorabscheider ist extrem einfach aufgebaut und daher sehr kostengünstig herstellbar, leichtgewichtig und benötigt nur sehr wenig Bauraum.

Der Funkenvorabscheider verhindert den Eintrag von Funken in das Rohrsystem oder die Entstaubungsanlage. Die abgesaugte Luft wird über den Strömungsteiler zu den Kulissen geleitet und durch die Kulissen abgebremst. Dadurch werden eingesaugte Funken zurückgehalten und zuverlässig in Richtung der Schwerkraft abgeschieden. Das Risiko eines Filterbrandes kann damit deutlich gesenkt werden. Durch die spezielle Konstruktion kann außerdem eine Ablagerung der abgeschiedenen Teilchen verhindert und der Wartungsaufwand nahezu auf null reduziert werden.

Anders als bei bekannten Funkenvorabscheidern wird bei dem erfindungsgemäßen Funkenvorabscheider der Gasstrom nicht in Rotation versetzt. Der Gasstrom wird durch ein Gehäuse mit einem Strömungsteiler und zwei Kulissen geführt, die gemeinsam den Strömungsquerschnitt vollständig überdecken. Wenn man also in der Strömungsrichtung des Gasstroms durch den Gasstromeingang in das Gehäuse schaut, ist der Gasstromausgang nicht zu sehen. Die Abscheidung der Funken und Partikel erfolgt durch die Umleitung des Gasstroms zur Seite und nach unten durch den mittig im Strömungsquerschnitt angeordneten Strömungsteiler, wodurch der Gasstrom mitsamt den darin enthaltenen Funken und Partikeln in zwei Teilströme aufgeteilt wird. Diese beiden Teilströme werden durch den Strömungsteiler seitlich nach außen auf die Gehäusewände zu verdrängt. Stromabwärts des Strömungsteilers treffen die beiden Teilströme auf je eine der beiden seitlich angeordneten Kulissen. Die Kulissen vernichten die restliche kinetische Energie der Funken und Partikel, so dass diese herunterfallen und damit aus dem Gasstrom abgeschieden werden. Nur das verbleibende Gas und die darin enthaltene leichte Partikelfraktion haben noch genügend kinetische Energie, um die Kulissen zu umströmen und anschließend das Gehäuse des Funkenvorabscheiders durch den Gasstromausgang zu verlassen.

In einer Ausgestaltung des vorgeschlagenen Funkenvorabscheiders kann vorgesehen sein, dass der Strömungsteiler aus einem Blechstreifen gefertigt ist, der sich von einer Oberseite zu einer Unterseite des Gehäuses erstreckt. Analog können die Kulissen aus je einem Blechstreifen gefertigt sein, die sich von einer Oberseite zu einer Unterseite des Gehäuses erstrecken.

Der Strömungsteiler weist in der Ansicht von oben ein V-förmiges Strömungsprofil auf. Dadurch wird der Gasstrom nicht unnötig abgebremst und verwirbelt, so dass möglichst wenig kinetische Energie verloren geht. Außerdem verlaufen die Kulissen in der Ansicht von oben parallel zu den Schenkeln des V-förmigen Strömungsprofils des Strömungsteilers. Hierdurch bildet sich jeweils in dem von einer Kulisse und der angrenzenden Gehäusewand eingeschlossenen Winkel eine Funkenfalle, die die Rückhaltewirkung der Kulissen noch verstärkt, weil sich die schweren Partikel, um die Kulissen zu überwinden, entgegen der generellen Gasströmung bewegen müssten.

In einer weiteren Ausgestaltung des vorgeschlagenen Funkenvorabscheiders sind der Strömungsteiler und die Kulissen aus Kupfer gefertigt. Dadurch wird den schweren Partikeln besonders schnell so viel Wärme entzogen, dass sie keine Brandgefahr mehr darstellen, selbst wenn sie die Kulissen überwinden würden.

In einer bevorzugten Ausgestaltung des vorgeschlagenen Funkenabscheiders sind der Strömungsteiler und die Kulissen gegenüber der Vertikalen so geneigt, dass auftreffende Partikel aufgrund der Schwerkraft abfallen. Durch diese Schrägstellung werden die Funken bereits durch den Strömungsteiler nach unten abgelenkt und treffen dann auf die Kulissen, welche ebenfalls schräg gestellt sind. Durch die schräge Anordnung des Strömungsteilers und der Kulissen wird auch der Luftstrom nach unten gelenkt, was die Abscheidewirkung noch unterstützt.

Gemäß einer weiteren Ausgestaltung weist der vorgeschlagene Funkenvorabscheider eine an der Unterseite des Gehäuses angeordnete Partikelsammelöffnung zur Entfernung abgeschiedener Partikel auf. Besonders vorteilhaft kann diese Partikelsammelöffnung zur lösbaren Anbringung eines Partikelsammelbehälters ausgebildet sein. Die Funken und Partikel fallen nach unten aus dem Gehäuse in den Partikelsammelbehälter, wobei der Gasstrom stromabwärts hinter den Kulissen wieder nach oben zum Gasstromausgang führt. Zur Unterstützung dieser Gasstromführung kann das Gehäuse entsprechend schräg angeordnete Gehäusewände aufweisen, so dass der untere Teil des Gehäuses annähernd trichterförmig ist.

Die Vorteile des vorgeschlagenen Funkenvorabscheiders können besonders bei der Verwendung des Funkenvorabscheiders in einer Entstaubungsanlage genutzt werden. Vorgeschlagen wird daher des Weiteren eine Entstaubungsanlage zur Entstaubung von Rohgas, mit einem von Gehäusewänden begrenzten Anlagengehäuse, das eine Rohgas-Eintrittsöffnung und eine Reingas-Austrittsöffnung aufweist und das durch eine Filteranordnung in einen Rohgasraum und einen Reingasraum unterteilt ist, wobei die Entstaubungsanlage einen Funkenvorabscheider zur Abscheidung einer schweren Partikelfraktion aus dem Gas-Volumenstrom der oben beschriebenen Art umfasst. Die Entstaubungsanlage kann daher ebenfalls relativ kostengünstig hergestellt werden.

Dabei kann weiter vorteilhaft beispielsweise vorgesehen sein, dass der Gasstromausgang des Funkenvorabscheiders unmittelbar mit der Rohgas-Eintrittsöffnung des Anlagengehäuses verbunden ist. Es ergibt sich eine kompakte Entstaubungsanlage mit integriertem Funkenvorabscheider.

Alternativ kann aber auch vorgesehen sein, dass der Funkenvorabscheider an einem vom Anlagengehäuse entfernten Ort, beispielsweise dem Ort der Rauchemission, angeordnet und durch einen Lüftungskanal mit der Rohgas-Eintrittsöffnung des Anlagengehäuses verbunden ist.

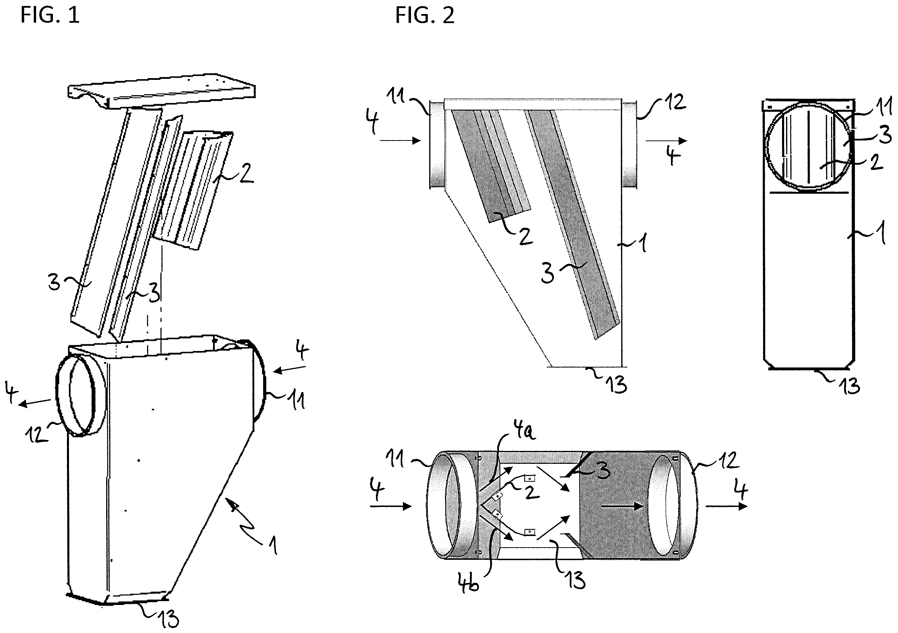

Nachfolgend wird die Erfindung anhand eines Ausführungsbeispiels und zugehöriger Zeichnungen näher erläutert. Darin zeigen
Fig. 1 eine Explosionsdarstellung, und
Fig. 2 drei Ansichten des Funkenvorabscheiders gemäß Ausführungsbeispiel.

Der Funkenvorabscheider weist ein von Gehäusewänden begrenztes Gehäuse 1 mit einem Gasstromeingang 11 und einem dem Gasstromeingang 11 horizontal gegenüberliegend angeordneten Gasstromausgang 12 auf. In dem Gehäuse 1 zwischen dem Gasstromeingang 11 und dem Gasstromausgang 12 sind ein Strömungsteiler 2 und zwei Kulissen 3 angeordnet. Der Strömungsteiler 2 ist, bezogen auf einen von dem Gehäuse 1 definierten Strömungsquerschnitt, mittig angeordnet und überdeckt einen Teilquerschnitt dieses Strömungsquerschnitts.

Der Strömungsteiler 2 ist dazu ausgebildet, den Gasstrom 4 in zwei horizontal nebeneinander strömende Teilströme 4a, 4b aufzuteilen und die Teilströme 4a, 4b seitlich zu verdrängen.

Beiderseits des Strömungsteilers 2 und stromabwärts hinter dem Strömungsteiler 2 sind die beiden Kulissen 3 so angeordnet, dass sie den nicht von dem Strömungsteiler 2 überdeckten Restquerschnitt des Strömungsquerschnitts überdecken.

Der Strömungsteiler 2 und die Kulissen 3 sind jeweils aus Blechstreifen aus Stahl oder Kupfer gefertigt, die sich von einer Oberseite aus auf eine Unterseite des Gehäuses zu erstrecken. Im Ausführungsbeispiel reichen der Strömungsteiler 2 und die Kulissen 3 jedoch nicht bis zur Unterseite des Gehäuses 1.

Der Strömungsteiler 2 weist in der Ansicht von oben ein V-förmiges Strömungsprofil auf und die Kulissen 3 verlaufen in der Ansicht von oben parallel zu den Schenkeln des V-förmigen Strömungsprofils des Strömungsteilers 2. Der Strömungsteiler 2 und die Kulissen 3 sind gegenüber der Vertikalen so geneigt, dass auftreffende Partikel aufgrund der Schwerkraft von ihnen abfallen. Eine an der Unterseite des Gehäuses 1 angeordnete Partikelsammelöffnung 13 dient zur Entfernung abgeschiedener Partikel. Zu diesem Zweck ist die Partikelsammelöffnung 13 zur lösbaren Anbringung eines Partikelsammelbehälters ausgebildet.

### Bezugszeichenliste

- 1: Gehäuse
- 11: Gasstromeingang
- 12: Gasstromausgang
- 13: Partikelsammelöffnung
- 2: Strömungsteiler
- 3: Kulisse
- 4: Gasstrom
- 4a, 4b: Teilstrom

## Patentansprüche

1. Funkenvorabscheider zur Abscheidung einer schweren Partikelfraktion aus einem Gasstrom (4), umfassend ein von Gehäusewänden begrenztes Gehäuse (1) mit einem Gasstromeingang (11) und einem dem Gasstromeingang (11) horizontal gegenüberliegend angeordneten Gasstromausgang (12), wobei
• in dem Gehäuse (1) zwischen dem Gasstromeingang (11) und dem Gasstromausgang (12) ein Strömungsteiler (2) und zwei Kulissen (3) angeordnet sind,
• der Strömungsteiler (2) bezogen auf einen von dem Gehäuse (1) definierten Strömungsquerschnitt mittig angeordnet ist, einen Teilquerschnitt dieses Strömungsquerschnitts überdeckt, in der Ansicht von oben ein V-förmiges Strömungsprofil aufweist und dadurch dazu ausgebildet ist, den Gasstrom (4) in zwei horizontal nebeneinander strömende Teilströme (4a, 4b) aufzuteilen und die Teilströme (4a, 4b) seitlich zu verdrängen,
• und die beiden Kulissen (3) beiderseits des Strömungsteilers (2) und stromabwärts hinter dem Strömungsteiler (2) angeordnet sind, einen nicht von dem Strömungsteiler (2) überdeckten Restquerschnitt des Strömungsquerschnitts überdecken, in der Ansicht von oben parallel zu den Schenkeln des V-förmigen Strömungsprofils des Strömungsteilers (2) verlaufen und dadurch in dem von einer Kulisse und der angrenzenden Gehäusewand eingeschlossenen Winkel eine Funkenfalle gebildet ist.

2. Funkenvorabscheider nach Anspruch 1, bei dem der Strömungsteiler (2) aus einem Blechstreifen gefertigt ist, der sich von einer Oberseite des Gehäuses (1) aus auf eine Unterseite des Gehäuses (1) zu erstreckt.

3. Funkenvorabscheider nach Anspruch 1 oder 2, bei dem die Kulissen (3) aus je einem Blechstreifen gefertigt sind, die sich von einer Oberseite des Gehäuses (1) aus auf eine Unterseite des Gehäuses (1) zu erstrecken.

4. Funkenvorabscheider nach einem der Ansprüche 1 bis 3, bei dem der Strömungsteiler (2) und die Kulissen (3) aus Kupfer gefertigt sind.

5. Funkenvorabscheider nach einem der Ansprüche 1 bis 4, bei dem der Strömungsteiler (2) und die Kulissen (3) gegenüber der Vertikalen so geneigt sind, dass auftreffende Partikel aufgrund der Schwerkraft abfallen.

6. Funkenvorabscheider nach einem der Ansprüche 1 bis 5, der eine an der Unterseite des Gehäuses (1) angeordnete Partikelsammelöffnung (13) zur Entfernung abgeschiedener Partikel aufweist.

7. Funkenvorabscheider nach Anspruch 6, bei dem die Partikelsammelöffnung (13) zur lösbaren Anbringung eines Partikelsammelbehälters ausgebildet ist.

8. Entstaubungsanlage zur Entstaubung von Rohgas, mit einem von Gehäusewänden begrenzten Anlagengehäuse, das eine Rohgas-Eintrittsöffnung und eine Reingas-Austrittsöffnung aufweist und das durch eine Filteranordnung in einen Rohgasraum und einen Reingasraum unterteilt ist, wobei die Entstaubungsanlage Funkenvorabscheider zur Abscheidung einer schweren Partikelfraktion aus dem Gas-Volumenstrom nach einem der Ansprüche 1 bis 7 umfasst.

9. Entstaubungsanlage nach Anspruch 8, bei der der Gasstromausgang (12) des Funkenvorabscheiders unmittelbar mit der Rohgas-Eintrittsöffnung des Anlagengehäuses verbunden ist.

10. Entstaubungsanlage nach Anspruch 9, bei der der Funkenvorabscheider an einem vom Anlagengehäuse entfernten Ort angeordnet und durch einen Lüftungskanal mit der Rohgas-Eintrittsöffnung des Anlagengehäuses verbunden ist.

## Claims

1. Spark pre-separator for separating a heavy particle fraction from a gas stream (4), comprising a housing (1) which is delimited by housing walls and which has a gas-stream entry (11) and has a gas-stream exit (12) which is arranged horizontally opposite the gas-stream entry (11), wherein
• a flow divider (2) and two baffles (3) are arranged in the housing (1) between the gas-stream entry (11) and the gas-stream exit (12),
• the flow divider (2) is arranged centrally in relation to a flow cross section defined by the housing (1), covers a partial cross section of this flow cross section, has a V-shaped flow profile in the view from above and, consequently, is configured for dividing the gas stream (4) into two partial streams (4a, 4b) flowing horizontally adjacent to one another and for laterally displacing the partial streams (4a, 4b),
• and the two baffles (3) are arranged on both sides of the flow divider (2) and behind the flow divider (2) downstream, cover a residual cross section, not covered by the flow divider (2), of the flow cross section, extend parallel to the legs of the V-shaped flow profile of the flow divider (2) in the view from above, and consequently a spark trap is formed within the angle included by a baffle and the adjoining housing wall.

2. Spark pre-separator according to Claim 1, in which the flow divider (2) is manufactured from a sheet-metal strip which extends from a top side of the housing (1) towards a bottom side of the housing (1) .

3. Spark pre-separator according to Claim 1 or 2, in which the baffles (3) are manufactured from in each case one sheet-metal strip which extends from a top side of the housing (1) towards a bottom side of the housing (1).

4. Spark pre-separator according to one of Claims 1 to 3, in which the flow divider (2) and the baffles (3) are manufactured from copper.

5. Spark pre-separator according to one of Claims 1 to 4, in which the flow divider (2) and the baffles (3) are inclined in relation to the vertical in such a way that, owing to gravitational force, impinging particles fall.

6. Spark pre-separator according to one of Claims 1 to 5, which has a particle collection opening (13), arranged on the bottom side of the housing (1), for removal of separated particles.

7. Spark pre-separator according to Claim 6, in which the particle collection opening (13) is configured for releasable attachment of a particle collection container.

8. Dedusting installation for dedusting raw gas, having an installation housing which is delimited by housing walls and which has a raw-gas inlet opening and has a clean-gas outlet opening and which is subdivided by a filter arrangement into a raw-gas space and a clean-gas space, wherein the dedusting installation comprises spark pre-separators for separating a heavy particle fraction from the gas volume stream according to one of Claims 1 to 7.

9. Dedusting installation according to Claim 8, in which the gas-stream outlet (12) of the spark pre-separator is connected directly to the raw-gas inlet opening of the installation housing.

10. Dedusting installation according to Claim 9, in which the spark pre-separator is arranged at a location at a distance from the installation housing and is connected by a ventilation duct to the raw-gas inlet opening of the installation housing.

## Revendications

1. Pré-séparateur d'étincelles destiné à séparer une fraction de particules lourdes d'un flux de gaz (4), ledit pré-séparateur d'étincelles comprenant un boîtier (1) délimité par des parois de boîtier et pourvu d'une entrée de flux de gaz (11) et d'une sortie de flux de gaz (12) disposée horizontalement à l'opposé de l'entrée de flux de gaz (11),
• un diviseur d'écoulement (2) et deux coulisses (3) étant disposés dans le boîtier (1) entre l'entrée de flux de gaz (11) et la sortie de flux de gaz (12),
• le diviseur d'écoulement (2) étant disposé au milieu par rapport à une section d'écoulement transversale définie par le boîtier (1), recouvrant une section transversale partielle de cette section d'écoulement transversale, présentant un profil d'écoulement en forme de V en vue de dessus et étant ainsi conçu pour diviser le flux de gaz (4) en deux flux partiels (4a, 4b) s'écoulant horizontalement l'un à côté de l'autre et pour déplacer les flux partiels (4a, 4b) latéralement,
• et les deux coulisses (3) étant disposées de part et d'autre du diviseur d'écoulement (2) et en aval en arrière du diviseur d'écoulement (2), recouvrant une section transversale résiduelle de la section d'écoulement transversale qui n'est pas recouverte par le diviseur d'écoulement (2), s'étendant en vue de dessus parallèlement aux branches du profil d'écoulement en forme de V du diviseur d'écoulement (2) et un piège à étincelles étant ainsi formé dans l'angle délimité par une coulisse et la paroi de boîtier adjacente.

2. Pré-séparateur d'étincelles selon la revendication 1, dans lequel le diviseur d'écoulement (2) est fabriqué à partir d'une bande de tôle qui s'étend d'une face supérieure du boîtier (1) à une face inférieure du boîtier (1).

3. Pré-séparateur d'étincelles selon la revendication 1 ou 2, dans lequel les coulisses (3) sont chacune fabriquées à partir d'une bande de tôle qui s'étend d'une face supérieure du boîtier (1) à une face inférieure du boîtier (1).

4. Pré-séparateur d'étincelles selon l'une des revendications 1 à 3, dans lequel le diviseur d'écoulement (2) et les coulisses (3) sont fabriqués à partir de cuivre.

5. Pré-séparateur d'étincelles selon l'une des revendications 1 à 4, dans lequel le diviseur d'écoulement (2) et les coulisses (3) sont inclinés par rapport à la verticale de telle sorte que les particules incidentes tombent par gravité.

6. Pré-séparateur d'étincelles selon l'une des revendications 1 à 5, qui comporte une ouverture de collecte de particules (13) ménagée dans la face inférieure du boîtier (1) et destinée à éliminer les particules séparées.

7. Pré-séparateur d'étincelles selon la revendication 6, dans lequel l'ouverture de collecte de particules (13) est conçue pour fixer de manière amovible un récipient de collecte de particules.

8. Système de dépoussiérage destiné à dépoussiérer un gaz brut, ledit système de dépoussiérage comprenant un boîtier de système qui est délimité par des parois de boîtier, qui comporte une ouverture d'entrée de gaz brut et une ouverture de sortie de gaz propre et qui est divisé en un espace de gaz brut et un espace de gaz propre par un ensemble de filtration, le système de dépoussiérage comprenant des pré-séparateurs d'étincelles destinés à séparer une fraction de particules lourdes du flux volumique de gaz selon l'une des revendications 1 à 7.

9. Système de dépoussiérage selon la revendication 8, dans lequel la sortie de flux de gaz (12) du pré-séparateur d'étincelles est directement reliée à l'ouverture d'entrée de gaz brut du boîtier de système.

10. Système de dépoussiérage selon la revendication 9, dans lequel le pré-séparateur d'étincelles est disposé à un endroit éloigné du boîtier de système et est relié à l'ouverture d'entrée de gaz brut du boîtier de système par un conduit de ventilation.
